# EUROPEAN PATENT SPECIFICATION

(11) **EP 4 113 470 B1**
(45) Date of publication and mention of the grant of the patent: **30.10.2024**
(21) Application number: 21182669.8
(22) Date of filing: 30.06.2021
(51) Int. Cl.: G08B 17/06

(54) **FIRE DETECTION SYSTEM FOR AN AIRCRAFT COMPARTMENT**
FEUERMELDEANLAGE FÜR EINEN FLUGZEUGRAUM
SYSTÈME DE DÉTECTION D'INCENDIE POUR COMPARTIMENT D'AÉRONEF

(43) Date of publication of application: 04.01.2023
(73) Proprietor: Airbus Operations GmbH, 21129 Hamburg (DE); Airbus Operations S.L.U., 28906 Getafe (ES)
(72) Inventor: FREILING, André, 21129 Hamburg (DE); NADLER, Norbert, 21129 Hamburg (DE); DAVID, Benjamin Vincent, 21129 Hamburg (DE)
(74) Representative: Isarpatent

(56) References cited:
- WO-A1-2020/079635
- CN-A- 106 781 193
- RU-C1- 2 718 434
- US-A1- 2008 106 437
- US-A1- 2019 277 669

## Description

The present invention pertains to a fire detection system for an aircraft compartment and an aircraft with such a fire detection system.

Aircraft systems for the detection of fire in pressurized areas of a fuselage typically rely on smoke detectors, which are usually based on optical light scattering technologies. More recent smoke detectors implement additional smart sensors employing multi-wavelength detection and/or temperature evaluation. However, a common pre-condition for most smoke detectors is that smoke and/or air reaches a measurement chamber of the respective detector. Due to this, smoke may not be an appropriate means to serve as a basis for fire detection in unpressurized aircraft compartments, e.g. in cargo bays. One reason for this are stratification effects, which may block the smoke from reaching a ceiling or wall segment where smoke detectors are normally installed.

Prior art document WO 2007/027600 A1 describes a fire sensor, a fire detection system and a fire suppression system for storage and/or cargo areas, e.g. on board of an aircraft. One or more fire temperature sensors may be located in a cargo area, e.g. above a cargo container, to detect the presence of a fire and/or a temperature higher than desired. Each such temperature sensor may contain a single sensing element or a matrix of individually packaged sensing elements, e.g. thermopiles.

Further, US 2008/106437 A1 discloses a fire alarm system in an air craft using an array of sensors (e.g. temperature) at a wall or ceiling of an aircraft compartment. Map data is generated and analysed spatially and temporally for potential fire alarm.

CN 106781193 A and US 2019/277669 A1 generally relate to fire alarm systems using fiber Bragg sensors for temperature measurements.

Against this background, it is an object of the present invention to find practical, yet effective and nevertheless economical solutions for detecting fire in aircraft compartments.

This object is achieved by a fire detection system having the features of claim 1 and an aircraft having the features of claim 110.

According to one aspect of the invention, a fire detection system for an aircraft compartment comprises a plurality of temperature sensors distributed in an array across a wall and/or a ceiling of the aircraft compartment to evenly cover a substantial surface portion and configured to measure the temperature at their respective position; and a system control unit configured to receive and analyze the temperature measured by each temperature sensor to establish a temperature distribution signature across the array of temperature sensors and to generate a fire warning signal in case that the temperature distribution signature fulfills predefined criteria characteristic of an occurring fire.

According to another aspect of the invention, an aircraft has an aircraft compartment equipped with a fire detection system according to the invention.

Thus, one idea of the present invention is to cover a significant portion of the surface of the walls and/or of the ceiling of an compartment with temperature sensors in a uniform way to achieve information on the temperature distribution across the surface. This relies on the insight that a fire can be recognized by its thermal signature and the corresponding spatially and/or time-dependent temperature distribution even in environments where smoke cannot sufficiently spread due to stratification effects. The measurement principle of the present invention is thus based on the detection of heat radiation and/or heat convection and not on the detection of airborne particulates and/or gases. To this end, multiple sensor signals are evaluated to gain insights on the temperature distribution across the surface of the compartment. It is to be understood in this respect that the present invention does not rely on a particular technology to measure the temperature at each position. The invention can be applied in any compartment, in which fire detection is required. However, the invention offers particular advantages for unpressurized compartments like cargo bays or the like.

Advantageous embodiments and improvements of the present invention are found in the subordinate claims.

According to an embodiment of the invention, the temperature sensors may be equally spaced from each other by a distance between 0.1 m and 2 m.

The distance between the sensors defines the spatial resolution of the measured temperature distribution. The distance and thus the resolution may vary in different spatial directions in this regard, e.g. different distances may be required, preferred and/or possible in a longitudinal compared to a lateral direction. For example, the distance between two sensors in horizontal and/or vertical directions (or in longitudinal and/or lateral directions) may typically be between 0.5 m and 1 m and the respective temperature distribution will then take into account any temperature fluctuation on this scale. However, even smaller distances may be possible in some applications and depending on the specific technology of the sensors. It is to be understood in this respect that the distance may be adopted to the size and geometry of the respective compartment that is to be monitored.

According to an embodiment of the invention, the system control unit may be configured to read-out the temperature measured by each temperature sensor with a read-out frequency of at least 0.1 Hz. The system control unit may be particularly configured to read-out the temperature measured by each temperature sensor with more than 1 Hz.

The controller thus can evaluate the data in fixed time intervals, which may typically be in the range of 1 Hz. The sensors may be read out at the same time or progressively one after another.

According to an embodiment of the invention, the predefined criteria may require that the temperature measured by at least one temperature sensor exceeds a first temperature threshold.

One criterium for establishing that a fire has broken out thus comprises a rise in absolute temperature above a certain threshold value. The temperature rise may occur rather locally, i.e. only one sensor gives a corresponding signal, or spatially spread out, which means that several sensors react at more or less the same time. The first threshold value may typically be chosen to be well above the maximum temperature, which can occur in the environment to be monitored, and well below the minimum temperature, which is hazardous to the area to be monitored.

According to an embodiment of the invention, the predefined criteria may require that the temperature measured by a predefined number of neighboring temperature sensors of the at least one temperature sensor having measured the temperature exceeding the first temperature threshold exceeds a second temperature threshold smaller than the first temperature threshold.

Hence, to achieve a better confidence and/or confirmation of the fire detection, a defined number of neighboring temperature sensors can be required to exceed at least a certain second threshold value that is somewhat lower than the first threshold.

According to an embodiment of the invention, the first threshold and/or the second threshold may depend on an average ambient temperature within the aircraft compartment.

In this embodiment, local temperature maxima may be compared to the average temperature of the rest of the compartment. To this end, the ambient temperature can either be acquired from other sensors, e.g. from a conventional environmental monitoring system of the compartment that provides information on average temperature, humidity and so on. Alternatively, or additionally, the ambient temperature may correspond to an average temperature as measured across all temperature sensors of the present system (e.g. a moving average).

Depending on weather and/or climate conditions, the compartment ambient temperature may not be constant. The ambient conditions under which the fire alarm has to be provided can be fixed and described specifically. For example, if the system typically operates at 0°C, the average temperature of all sensors will be in this range. Correspondingly, it will be at 50°C if the environment is hot. A local temperature maximum can be regarded relatively to the average temperature of all sensors. If the average temperature is at 0°C, an alarm might be provided if one sensor (and/or its surrounding sensors) indicate 40°C. If the average of all sensors is 50°C, an alarm might be provided at 90°C.

According to an embodiment of the invention, the predefined criteria may require that a temperature gradient between the at least one temperature sensor having measured the temperature exceeding the first temperature threshold and neighboring temperature sensors exceeds a gradient threshold.

Thus, besides absolute temperature values also spatial temperature gradients can be incorporated into the decision making process. For example, the temperature will be higher directly above the fire than at neighboring locations due to the thermal buoyancy of a flame or hot spot. A criteria for a fire alarm thus may be the temperature difference between one temperature sensor and all surrounding sensors which are arranged, for example, circularly around the central temperature sensor that has detected the highest temperature. This highest temperature and the required temperature difference may be stored in the control unit to provide an alarm if the criteria are met.

According to an embodiment of the invention, the predefined criteria may require that a change over time of the temperature measured by at least one temperature sensor exceeds a rate-of-rise threshold.

Similar to the spatial resolution of the system, a time resolved criteria may hence be used. A fire will develop in time. If the temperature rate of rise for one or several temperature sensors exceeds a predefined value, a fire alarm may be provided by the control unit.

According to an embodiment of the invention, the predefined criteria may require that the temperature distribution signature matches a modeled temperature distribution signature.

To this end, advanced machine learning and/or pattern recognition algorithms may be trained on typical fire signatures that can or are expected to potentially occur inside the respective compartment. If the fire source and/or scenario can be described in detail, e.g. the location of the danger source is always at a similar location, the system can be trained and pattern recognition, principal component analysis (PCA) or neural network learning or similar methods can be applied.

According to the invention, at least subgroups of the temperature sensors are communicatively interconnected with each other in a linear arrangement one after the other.

In this very simple arrangement, every temperature sensor may know its position in the array, which may be assured by the control unit evaluating the data of every sensor in the array.

According to the invention, the temperature sensors may be configured as optical fiber sensors. The temperature sensors are configured as fiber Bragg grating sensors. At least subgroups of the temperature sensors are engraved at different lengths along respective optical fibers. The system control unit is configured as an electro-optical control unit optically coupled to the optical fibers to read out optical signals from the temperature sensors over a length of the optical fibers.

A fiber-optic sensor is a sensor that uses an optical fiber as the sensing element and offers various significant advantages in particular in the aviation field. Fibers have a very small size and many sensors can be multiplexed along the length of a typical fiber. Fiber-optic sensors are immune to electromagnetic interference and do not conduct electricity so they can be used in places where there is high voltage electricity or flammable material such as jet fuel. Fiber-optic sensors can be designed to withstand high temperatures as well. Moreover, these sensor systems typically have minimal power requirements.

A fiber Bragg grating is a type of distributed Bragg reflector constructed in a short segment of optical fiber that reflects particular wavelengths of light and transmits all others. This is achieved by creating a periodic variation in the refractive index of the fiber core, which generates a wavelength-specific dielectric mirror. As well as being sensitive to strain, the Bragg wavelength is also sensitive to temperature. This means that fiber Bragg gratings can be used as sensing elements in optical fiber sensors. As such, they offer significant advantages over traditional electronic gauges in that they are less sensitive to external influences like vibration, pressure or EMI and consequently are far more reliable. They have particularly high potential for measuring strain and temperature in or on composite materials for aircraft structures.

Hence, in accordance with the invention, the sensors are engraved at different lengths of one or several lightweight fiber optical lines. Each strand of sensors can then be placed throughout the compartment and on, in and/or around metallic and/or composite structures. The fibers are arranged under equal intervals lengthwise along the barrel of a typical aircraft fuselage, each fiber being oriented along a circumferential extension of an inner fuselage surface. The system control unit can be coupled to each fiber and be adapted to integrate and process continuous temperature data from the sensors placed along the length of each fiber. To this end, an optical interrogator may be used that produces and reads the optical signals over the entire length of the fiber line.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically depicts a side view of a fire detection system for an aircraft compartment according to an embodiment of the invention.
Fig. 2 schematically depicts the fire detection system of Fig. 1 in a top view.
Fig. 3 schematically depicts an aircraft having an aircraft compartment with the fire detection system of Fig. 1.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

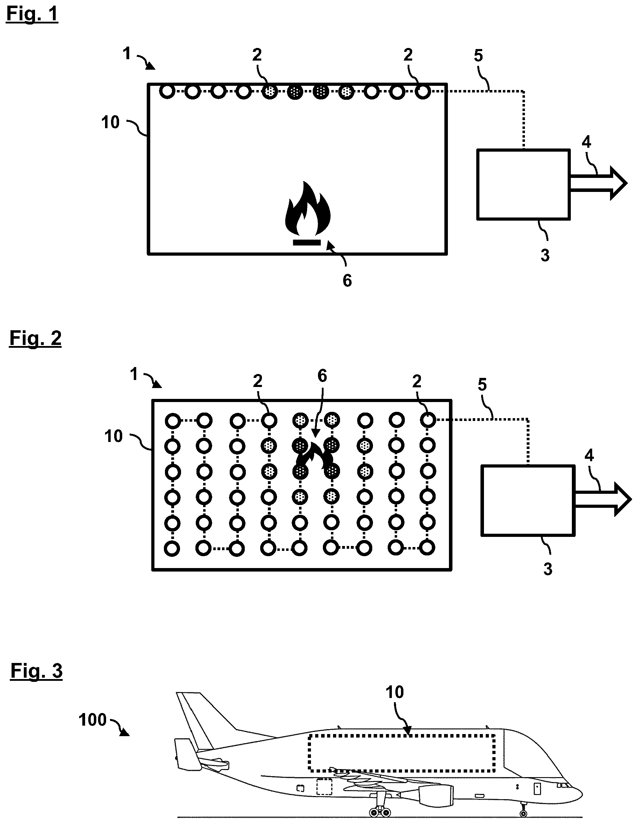

Figure 1 schematically depicts a side view of a fire detection system 1 for an aircraft compartment 10 according to an embodiment of the invention. Fig. 2 schematically depicts the fire detection system 1 of Fig. 1 in a top view, while Fig. 3 shows an exemplary aircraft 100 having an aircraft compartment 10 with the fire detection system 1 of Fig. 1. The aircraft 100 may be, for example, a cargo aircraft adapted to transport various kinds of cargo inside a large cargo compartment.

In the depicted embodiment, the fire detection system 1 comprises an array of temperature sensors 2 distributed across a ceiling of the aircraft compartment 10. The temperature sensors 2 are arranged to evenly cover substantially the entire surface of the ceiling. As can be seen in Fig. 2, the temperature sensors 2 form a linear arrangement, in which they are communicatively interconnected with each other one after the other along a read out line 5, which in turn is connected to a system control unit 3.

In accordance with the invention, the temperature sensors 2 are configured as optical fiber sensors, being fiber Bragg grating sensors. This means that the temperature sensors 2 are engraved at different lengths along one or several optical fibers serving as communication and measurement medium at the same time. In other words, one or several read out lines 5 as shown in Figs. 1 and 2 may be provided as optical fibers (or fiber bundles) and may serve as measurement medium at the same time.

However, it is to be understood that the fire detection approach as described further below is independent from a chosen temperature detection technology. Hence, also different sensor solutions can be used for the invention, as long as the surface of the compartment's 10 ceiling or/and walls can be covered with equally spaced temperature sensors in a sufficiently continuous form to acquire information on the temperature distribution.

Furthermore, it is to be understood that the configuration in Fig. 2 is merely schematic and that many such linear sensor arrangements can be combined within the cargo compartment 10 of the aircraft 100. For example, the cargo compartment 10 may have a barrel-like shape. Optical fibers may then be installed in intervals along an azimuthal direction, each fiber running along at least a portion of the circumference of the compartment barrel, e.g. along the ceiling and/or the walls. A plurality of such circumferentially running fibers may then be arranged one behind the other along an axial direction of the barrel, that is, the longitudinal axis of the aircraft 100. In that vein, a substantial portion of the ceiling and/or walls of the cargo compartment 10 can be evenly covered by the fibers such that discrete temperature measurement points are distributed across the inner surface of the aircraft compartment 10. The distances between individual sensors then define the spatial resolution of the measurement system. For example, the temperature sensors 2 may be equally spaced from each other by a distance between 0.5 m to 1 m.

It is to be understood though, that the principles described with regards to the present embodiment can also be applied to regular aircraft cargo compartments and also to differently shaped cargo compartments of specifically designed cargo aircraft, like for example the Airbus Beluga aircraft category.

As was mentioned above, the fire detection system 1 further comprises a system control unit 3. The system control unit 3 is configured to receive and analyze the temperature measured by each temperature sensor 2 to establish a temperature distribution signature across the array of temperature sensors 2. In the example of a fiber based measurement approach, the system control unit may be and/or may comprise an electro-optical control unit optically coupled to the optical fibers to read out optical signals from the temperature sensors 2 over a length of the optical fibers. The system control unit 3 may be adapted to read-out the temperature measured by each temperature sensor 2 with a read-out frequency of typically 1 Hz.

The system control unit 3 may further comprise and/or be connected to a computer processing system comprising adequate hardware and software to assess and analyze the temperature distribution signature. The system control unit 3 then can generate a fire warning signal 4 in case that the temperature distribution signature fulfills predefined criteria characteristic of an occurring fire 6.

The fire 6 is thus recognized by its thermal signature and temperature gradient, spatially- and/or time-dependent. The measurement is based on detection of heat radiation and/or heat convection and not on the detection of smoke or gases. Independently from the chosen temperature detection technology, an approach is defined to evaluate multiple sensor signals. If one or multiple criteria for signal evaluation are met, the control unit 3 sends a fire alarm 4 to its output. The utilized algorithm may be a combination of multiple software evaluation principles performed inside the control unit 3. The predefined criteria can combine, for example, several or all of the following requirements (based on AND/OR logics):
- temperature measured by at least one temperature sensor 2 exceeds a first temperature threshold (absolute temperature criterium),
- temperature measured by a predefined number of neighboring temperature sensors 2 of the at least one temperature sensor 2 having measured the temperature exceeding the first temperature threshold exceeds a second temperature threshold smaller than the first temperature threshold (refined absolute temperature criterium),

- thresholds depend on an average ambient temperature within the aircraft compartment (relative temperature criterium),
- temperature gradient between the at least one temperature sensor 2 having measured the temperature exceeding the first temperature threshold and neighboring temperature sensors 2 exceeds a gradient threshold (spatial temperature gradient criterium),
- change over time of the temperature measured by at least one temperature sensor 2 exceeds a rate-of-rise threshold (rate-of-rise criterium),
- temperature distribution signature matches a modeled temperature distribution signature (pattern matching criterium).

For illustrative purposes, the temperature sensors 2 detecting a relevant rise in temperature are depicted with more or less dark hatchings in Figs. 1 and 2. The sensors 2 in the immediate vicinity of the fire 6 have the highest temperatures and thus the darkest hatching (e.g. a temperature above the first threshold). The sensors 2 somewhat further off may also show a relevant if somewhat smaller rise in temperature (e.g. a temperature above the second threshold, lighter hatching). If the first threshold is crossed by at least one sensor 2 and at least some of the further sensors 2 pass the second threshold, then a fire warning 4 may be raised.

As a result, an approach for fire detection is provided that makes use of the spatiotemporal information of occurring and/or arising fires within an aircraft compartment. To this end, relevant surfaces of the compartment are evenly covered by an array of temperature sensors to acquire a detailed picture of the current temperature distribution across the compartment, which is then used to assess whether a fire alarm has to be issued or not.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### List of reference signs

- 1: fire detection system
- 2: temperature sensor
- 3: system control unit
- 4: fire warning signal
- 5: read out line
- 6: occurring fire
- 10: aircraft compartment
- 100: aircraft

## Claims

1. Fire detection system (1) for an aircraft compartment (10), comprising:
a plurality of temperature sensors (2) distributed in an array across at least one of a wall and a ceiling of the aircraft compartment (10) to evenly cover a substantial surface portion and configured to measure the temperature at their respective position; and
a system control unit (3) configured to receive and analyze the temperature measured by each temperature sensor (2) to establish a temperature distribution signature across the array of temperature sensors (2) and to generate a fire warning signal (4) in case that the temperature distribution signature fulfills predefined criteria characteristic of an occurring fire (6);
wherein at least subgroups of the temperature sensors (2) are communicatively interconnected with each other in a linear arrangement one after the other;
wherein the temperature sensors (2) are configured as fiber Bragg grating sensors, wherein at least subgroups of the temperature sensors (2) are engraved at different lengths along respective optical fibers, wherein the system control unit (3) is configured as an electro-optical control unit optically coupled to the optical fibers to read out optical signals from the temperature sensors (2) over a length of the optical fibers;
wherein the optical fibers are arranged under equal intervals lengthwise along a barrel of an aircraft fuselage, each fiber being oriented along a circumferential extension of an inner fuselage surface.

2. Fire detection system (1) according to claim 1, wherein the temperature sensors (2) are equally spaced from each other by a distance between 0.1 m and 2 m.

3. Fire detection system (1) according to claim 1 or 2, wherein the system control unit (3) is configured to read-out the temperature measured by each temperature sensor (2) with a read-out frequency of at least 0.1 Hz, in particular with more than 1 Hz.

4. Fire detection system (1) according to one of the claims 1 to 3, wherein the predefined criteria require that the temperature measured by at least one temperature sensor (2) exceeds a first temperature threshold.

5. Fire detection system (1) according to claim 4, wherein the predefined criteria require that the temperature measured by a predefined number of neighboring temperature sensors (2) of the at least one temperature sensor (2) having measured the temperature exceeding the first temperature threshold exceeds a second temperature threshold smaller than the first temperature threshold.

6. Fire detection system (1) according to claim 4 or 5, wherein at least one of the first threshold and the second threshold depends on an average ambient temperature within the aircraft compartment.

7. Fire detection system (1) according to one of the claims 4 to 6, wherein the predefined criteria require that a temperature gradient between the at least one temperature sensor (2) having measured the temperature exceeding the first temperature threshold and neighboring temperature sensors (2) exceeds a gradient threshold.

8. Fire detection system (1) according to one of the claims 4 to 7, wherein the predefined criteria require that a change over time of the temperature measured by at least one temperature sensor (2) exceeds a rate-of-rise threshold.

9. Fire detection system (1) according to one of the claims 1 to 8, wherein the predefined criteria require that the temperature distribution signature matches a modeled temperature distribution signature.

10. Aircraft (100) having an aircraft compartment (10) equipped with a fire detection system (1) according to one of the claims 1 to 9.

## Patentansprüche

1. Feuerdetektionssystem (1) für einen Flugzeugraum (10), das Folgendes umfasst:
eine Vielzahl von Temperatursensoren (2), die in einem Array über mindestens eines von einer Wand und einer Decke des Flugzeugraums (10) verteilt sind, um einen wesentlichen Flächenabschnitt abzudecken, und die dazu ausgelegt sind, die Temperatur an ihrer jeweiligen Position zu messen; und
eine Systemsteuereinheit (3), die dazu ausgelegt ist, die von jedem Temperatursensor (2) gemessene Temperatur zu empfangen und zu analysieren, um über das Array von Temperatursensoren (2) eine Temperaturverteilungssignatur zu erstellen, und um ein in einem Fall, dass die Temperaturverteilungssignatur vorbestimmte Kriterien erfüllt, die für ein Auftreten eines Feuers (6) charakteristisch sind, Warnsignal (4) zu erzeugen;
wobei mindestens Untergruppen der Temperatursensoren (2) einer nach dem anderen in einer linearen Anordnung kommunikativ zusammengeschaltet sind;
wobei die Temperatursensoren (2) als Bragg-Fasergittersensoren ausgelegt sind, wobei mindestens Untergruppen der Temperatursensoren (2) bei verschiedenen Längen entlang jeweiligen optischen Fasern eingraviert sind, wobei die Systemsteuereinheit (3) als eine elektrooptische Steuereinheit ausgelegt ist, die optisch an die optischen Fasern gekoppelt ist, um aus den Temperatursensoren (2) über eine Länge der optischen Fasern optische Signale auszulesen;
wobei die optischen Fasern unter gleichen Intervallen in Längsrichtung entlang eines Fasses eines Flugzeugrumpfes angeordnet sind, wobei jede Faser entlang einer Umfangserstreckung einer inneren Rumpffläche ausgerichtet ist.

2. Feuerdetektionssystem (1) nach Anspruch 1, wobei die Temperatursensoren (2) um einen Abstand zwischen 0,1 m und 2 m gleich voneinander beabstandet sind.

3. Feuerdetektionssystem (1) nach Anspruch 1 oder 2, wobei die Systemsteuereinheit (3) dazu ausgelegt ist, die von jedem Temperatursensor (2) gemessene Temperatur mit einer Auslesefrequenz von mindestens 0,1 Hz, insbesondere mit mehr als 1 Hz, auszulesen.

4. Feuerdetektionssystem (1) nach einem der Ansprüche 1 bis 3, wobei die vordefinierten Kriterien erfordern, dass die von mindestens einem Temperatursensor (2) gemessene Temperatur einen ersten Temperaturschwellwert überschreitet.

5. Feuerdetektionssystem (1) nach Anspruch 4, wobei die vordefinierten Kriterien erfordern, dass die von einer vordefinierten Anzahl von benachbarten Temperatursensoren (2) des mindestens einen Temperatursensors (2), der die Temperatur gemessen hat, die den ersten Temperaturschwellwert überschreitet, gemessene Temperatur einen zweiten Temperaturschwellwert überschreitet, der kleiner ist als der erste Temperaturschwellwert.

6. Feuerdetektionssystem (1) nach Anspruch 4 oder 5, wobei mindestens einer des ersten Schwellwerts und des zweiten Schwellwerts von einer durchschnittlichen Umgebungstemperatur im Flugzeugraum abhängig ist.

7. Feuerdetektionssystem (1) nach einem der Ansprüche 4 bis 6, wobei die vordefinierten Kriterien erfordern, dass ein Temperaturgradient zwischen dem mindestens einen Temperatursensor (2), der die Temperatur gemessen hat, die den ersten Temperaturschwellwert überschreitet, und benachbarten Temperatursensoren (2) einen Gradientenschwellwert überschreitet.

8. euerdetektionssystem (1) nach einem der Ansprüche 4 bis 7, wobei die vordefinierten Kriterien erfordern, dass eine Änderung der Temperatur, die von mindestens einem Temperatursensor (2) gemessen wird, über die Zeit einen Anstiegsratenschwellwert überschreitet.

9. Feuerdetektionssystem (1) nach einem der Ansprüche 1 bis 8, wobei die vordefinierten Kriterien erfordern, dass die Temperaturverteilungssignatur mit einer modellierten Temperaturverteilungssignatur übereinstimmt.

10. Flugzeug (100) mit einem Flugzeugraum (10), der mit einem Feuerdetektionssystem (1) nach einem der Ansprüche 1 bis 9 ausgerüstet ist.

## Revendications

1. Système (1) de détection d'incendie pour compartiment (10) d'aéronef, comportant :
une pluralité de capteurs (2) de température répartis en un réseau à travers une paroi et/ou un plafond du compartiment (10) d'aéronef pour recouvrir régulièrement une portion substantielle de surface et configurés pour mesurer la température à leur position respective ; et une unité (3) de commande de système configurée pour recevoir et analyser la température mesurée par chaque capteur (2) de température afin d'établir une signature de distribution de température à travers le réseau de capteurs (2) de température et pour générer un signal (4) d'avertissement d'incendie dans un cas où la signature de distribution de température satisfait à des critères prédéfinis caractéristiques de la survenue d'un incendie (6) ;
au moins des sous-groupes des capteurs (2) de température étant interconnectés entre eux de façon à pouvoir communiquer dans une disposition linéaire l'un après l'autre ;
les capteurs (2) de température étant configurés comme des capteurs à réseau de Bragg sur fibre, au moins des sous-groupes des capteurs (2) de température étant gravés à des longueurs différentes le long de fibres optiques respectives, l'unité (3) de commande de système étant configurée comme une unité de commande électro-optique couplée optiquement aux fibres optiques pour lire des signaux optiques provenant des capteurs (2) de température sur une longueur des fibres optiques ;
les fibres optiques étant disposées à intervalles égaux longitudinalement le long d'un fût d'un fuselage d'aéronef, chaque fibre étant orientée suivant une étendue circonférentielle d'une surface intérieure de fuselage.

2. Système (1) de détection d'incendie selon la revendication 1, les capteurs (2) de température étant espacés uniformément l'un par rapport à l'autre d'une distance comprise entre 0,1 m et 2 m.

3. Système (1) de détection d'incendie selon la revendication 1 ou 2, l'unité (3) de commande de système étant configurée pour lire la température mesurée par chaque capteur (2) de température avec une fréquence de lecture d'au moins 0,1 Hz, en particulier de plus de 1 Hz.

4. Système (1) de détection d'incendie selon une des revendications 1 à 3, les critères prédéfinis imposant que la température mesurée par au moins un capteur (2) de température dépasse un premier seuil de température.

5. Système (1) de détection d'incendie selon la revendication 4, les critères prédéfinis imposant que la température mesurée par un nombre prédéfini de capteurs (2) de température, voisins du ou des capteurs (2) de température ayant mesuré la température dépassant le premier seuil de température, dépasse un second seuil de température inférieur au premier seuil de température.

6. Système (1) de détection d'incendie selon la revendication 4 ou 5, au moins un seuil parmi le premier seuil et le second seuil dépendant d'une température ambiante moyenne à l'intérieur du compartiment d'aéronef.

7. Système (1) de détection d'incendie selon une des revendications 4 à 6, les critères prédéfinis imposant qu'un gradient de température entre le ou les capteurs (2) de température ayant mesuré la température dépassant le premier seuil de température et des capteurs (2) de température voisins dépasse un seuil de gradient.

8. Système (1) de détection d'incendie selon une des revendications 4 à 7, les critères prédéfinis imposant qu'une variation dans le temps de la température mesurée par au moins un capteur (2) de température dépasse un seuil de vitesse d'accroissement.

9. Système (1) de détection d'incendie selon une des revendications 1 à 8, les critères prédéfinis imposant que la signature de distribution de température concorde avec une signature modélisée de distribution de température.

10. Aéronef (100) doté d'un compartiment (10) d'aéronef équipé d'un système (1) de détection d'incendie selon une des revendications 1 à 9.
